# EUROPEAN PATENT SPECIFICATION

(11) **EP 3 604 892 B1**
(45) Date of publication and mention of the grant of the patent: **07.06.2023**
(21) Application number: 18306045.8
(22) Date of filing: 01.08.2018
(51) Int. Cl.: F17C 5/06, F17C 13/00

(54) **DEVICE AND PROCESS FOR REFUELLING CONTAINERS WITH PRESSURIZED GAS**
VORRICHTUNG UND VERFAHREN ZUR BEFÜLLUNG VON BEHÄLTERN MIT DRUCKGAS
DISPOSITIF ET PROCÉDÉ POUR RAVITAILLER DES RÉCIPIENTS AVEC DU GAZ SOUS PRESSION

(43) Date of publication of application: 05.02.2020
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: BUCK, Marcus, 65195 WIESBADEN (DE); WERLEN, Etienne, 75007 PARIS (FR)
(74) Representative: Air Liquide

(56) References cited:
- EP-A1- 3 214 355
- WO-A1-2018/104982
- JP-B1- 5 716 208
- US-B2- 7 997 092

## Description

The invention relates to a device and process for refuelling containers with pressurized gas.

The invention relates more particularly to a device for refuelling containers with pressurized gas in accordance with independent claim 1.

Hydrogen refuelling stations are designed for fast refuelling (few minutes) of Fuel Cell Electrical Vehicles (FCEV) with hydrogen at high pressure (for example equal or above 70 MPa). Hydrogen needs to be precooled (generally below -33°C) at dispenser refuelling nozzle in order to avoid overheating in the tank.

A known cooling or refrigeration system feeds a hydrogen cooling heat exchanger with a refrigerant of a refrigerant cooling loop circuit.

Refrigerant may be CO2. See for example documents JP20150921108A or US2016348840A. See also WO2018104983A.

Generally, the heat exchanger includes a mass or block of material for storing cold for responding to high demand. The refrigeration device may provide nearly constant cooling and the cooling energy is stored in the thermal inertia of the heat exchanger (high thermal inertia).

However, the thermal inertia may be not sufficient in some situations to provide the cold needed. In addition, when using another type of heat exchanger (ex: a compact diffusion bonded heat exchanger) the thermal inertia is small. In that cases, the cooling energy has to be provided when there is a demand. This demand might change within seconds from zero to full cooling power.

Most efficient use of the cooling power is done using counter-current heat exchanger. In that case, it is desirable that the temperature of the refrigerant at the inlet to the heat exchanger remains in a pre-determined range of temperature.

For that purpose, pre-determined evaporation pressure range should be maintained at the inlet of the heat exchanger. Also, sufficient superheat should be maintained at the suction of the compressor. Superheat is for example the predetermined amount of heat added to the refrigerant after it has already vaporized. It can be defined by a temperature at a given pressure and may be measured at the outlet of the heat exchanger or at compressor inlet. The evaporation temperature of the refrigerant depends on pressure.

The reason why superheat is controlled is to make sure that the liquid refrigerant in the evaporator section has fully changed from a liquid to vapour (since it is wanted to have only vapour returning to the compressor suction/inlet).

The refuelling device (or station) may also be set in standby mode (waiting situation for refuelling) for an extended time. And even if there is a refuelling, the amount of gas might below the maximum design values. In those cases, the refrigeration system will operate at low load.

Documents EP3214355A, WO2018104987, JP5716208B and US7997092 disclose devices and processes.

In addition, it is difficult to provide the right cooling of the gas in changing situations.

One goal is to overcome or reduce at least one of the preceding problems.

To this end, the device according the invention, is defined by claim 1. In particular, the refrigerant cooling loop circuit comprises a bypass conduit comprising an upstream end connected to the outlet of the compressor and a downstream end connected to the refrigerant cooling loop circuit upstream the compressor inlet and bypassing the condenser section and expansion valve, the device comprising a bypass regulating valve for controlling the flow of refrigerant flowing into the by-pass conduit.

In addition, embodiments might include one or several of the below features:
- the signal indicative of the cooling power needed at the heat exchanger comprises or depends on the quantity or the flowrate of gas flowing through the transfer circuit,
- the signal indicative of the cooling power needed at the heat exchanger comprises or depends on the temperature of the gas flowing through the transfer circuit,
- that the signal indicative of the cooling power needed at the heat exchanger comprises or depends on external demand such as a wireless signal transmitted to the electric controller,
- the signal indicative of the cooling power needed at the heat exchanger comprises or depends on at least one among: the pressure of the gas flowing through the transfer circuit, a pressure value or pressure change in the gas source,
- the device comprises a differential temperature sensor system measuring the difference between the temperature of the refrigerant in the refrigerant cooling loop circuit at the outlet of the heat exchanger and the temperature of the refrigerant in the cooling loop circuit at the inlet of the heat exchanger, the electronic controller being configured for controlling the cooling power produced as a function of this temperature differential,
- the downstream end of the bypass conduit is connected at the outlet of the heat exchanger of the transfer circuit,
- the electronic controller is configured for calculating the cooling power needed as a function of the gas flowrate to be cooled multiplied by the difference between the enthalpy of the gas at the inlet of the heat exchanger and the enthalpy of said gas at the outlet of the heat exchanger to achieve a predetermined temperature at the downstream end of the transfer circuit,

The invention also deals with a process for refuelling containers with pressurized gas in accordance with independent claim 9.

According to other embodiments, the invention can include one or several of the below features:
- the process comprises a step of controlling the cooling power produced at the evaporator section of the refrigerant cooling loop circuit as a function of a signal indicative of the cooling power demand at the heat exchanger, said signal including at least one among: the quantity or flowrate of gas flowing through the transfer circuit, the temperature of the gas flowing through the transfer circuit, the pressure of the gas flowing through the transfer circuit, a pressure or pressure change in the gas source, a demand from a user for refuelling a container, a wireless signal,
- the cooling power required is calculated based on the gas flow in the transfer circuit and a predetermined inlet temperature at the heat exchanger,
- the process comprises a step of controlling the cooling power produced in the evaporator section of the refrigerant cooling loop circuit via the control of the opening of the expansion valve,
- the required refrigerant flow in the heat exchanger is calculated based on the required cooling power, said flow being provided via required opening of the expansion valve
- the expansion valve opening signal is used to generate a feed forward signal for the cooling power control.

The invention mays also relate to any alternative device or process comprising any combination of the above or below features within the scope of the claims.

Other particularities or advantages will be apparent from the reading of the below description, referring to the drawings wherein:
- figure 1 is schematic and partial view showing the structure and operation of a refuelling device according to a first embodiment,
- figure 2 is schematic and partial view showing the structure and operation of a refuelling device according to a second embodiment,
- figure 3 is schematic and partial view showing the structure and operation of a refuelling device according to a third embodiment,
- figure 4 is schematic and partial view showing the structure and operation of a refuelling device according to a fourth embodiment,
- figures 5 et 8 are schematic and partial views of different possible operations of the device and process that might be implemented (independently or combined),
   figure 9 is schematic and partial view showing the structure and operation of a refuelling device according to a further embodiment.

As illustrated in the drawings, the device 1 for refuelling containers 3 might be a fuelling station for refuelling a pressurized gas to vehicle tanks (for example hydrogen but it may apply to other gases: natural gas...).

The device 1 comprises a pressurized gas source 2, a transfer circuit 4 comprising one upstream end 5 connected to the gas source 2 and at least one downstream end 6 (for example provided with a nozzle) intended to be removably connected to a container or tank 3 to be filled.

The gas source 2 may include for example at least one among: pressurized gas storage(s) or buffer(s), compressor(s), bundle(s) of pressurized gas cylinders or tube trailers(s), a liquefied gas source and a vaporiser, an electrolyser, a gas network outlet.

The transfer circuit 4 may comprise a set a valves controlled by an electronic controller according to a predefined refuelling strategy (pressure increase or rate of pressure increase and/or mass injected control and/or control of the density in the tank 3 and/or control of the temperature increase in the tank 3).

The device 1 comprises a refrigeration system for cooling the gas flowing from the gas source 2 prior to its entering into the container 3 (for example to a predefined temperature below 0°C notably between -33°C and -40°C). The cooled gas temperature may also be controlled to vary according to refuelling condition(s) (as a function of temperature and/or pressure in the tank 3, rate of pressure increase in the tank 3, flowrate of gas in the transfer circuit 4, the ambient temperature...).

The refrigeration system comprises a refrigerant cooling loop circuit 20 comprising, arranged in series, a compressor 8, a condenser section 9, an expansion valve 10 and an evaporator section 11. The refrigerant flowing in the cooling loop circuit 20 is preferably carbon dioxide but another refrigerant might be used such as R717 (ammonia), R22, R134a, R404a, R507 or any refrigerant capable of reaching a temperature of at least -40°C.

The condenser section 9 may include heat exchanger for cooling the refrigerant compressed by the compressor 8.

The refrigeration system comprises a cold source 12 in heat exchange with the condenser section 9. This cold source 12 may include a cooling fluid circuit such as a loop. For example, air, water, nitrogen or any appropriate cooling fluid or refrigerant. The cold source may include any other cold organ or device able to cool the refrigerant such as thermoconvectors, cooling tower or secondary refrigerating cycle. The cooling fluid from the cold source 12 may be in heat exchange with the condenser section 9 in a heat exchanger.

The refrigeration system comprises preferably a heat exchanger 7 located in the transfer circuit 4 and comprising a heat exchange section between the gas flowing in the transfer circuit 4 and the evaporator section 11. The evaporator section 11 may comprise a circuit (for example coils) in heat exchange with the transfer circuit 4 and/or with a mass of material (aluminium or the like) forming an organ having a high thermal inertia for storing cold (for example a several centimetres thick metal or aluminium block and/or other material such a Phase Change Material).

According to the appended claims, the refrigerant cooling loop circuit 20 comprises a bypass conduit 13 comprising an upstream end connected to the outlet of the compressor 8 and a downstream end connected upstream the compressor 8 in the refrigerant cooling loop circuit 20 and bypassing the condenser section 9 and expansion valve 10. The refrigeration device comprises a bypass regulating valve 15 for controlling the flow of refrigerant flowing into the by-pass conduit 13.

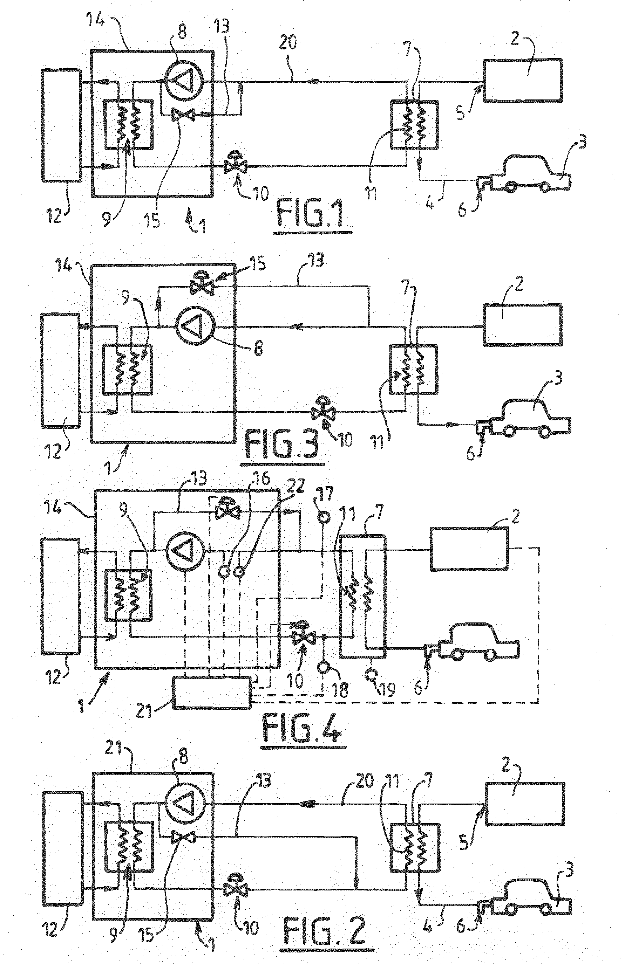

As illustrated in figure 1 at least part of: the compressor 8, the condenser section 9, the cold source 12, the bypass regulating valve, and possibly the expansion valve 10 might be located in a frigorific module 14.

As illustrated in figure 1, the downstream end of the bypass conduit 13 (the upstream is connected to the compressor outlet) may be connected directly to the suction line of the compressor 8. This means that the hot compressed bypassed refrigerant is reinjected directly into the inlet of the compressor 8.

In another embodiment (figure 2) the downstream end of the bypass conduit 13 may be connected upstream the inlet of the heat exchanger 7. This second solution allows the mixing of the hot compressed bypassed refrigerant and the colder refrigerant flow regulated by the expansion valve 10 before entering into the heat exchanger 7. This permits the expansion valve 10 to maintain superheat level (a sufficient temperature) in the circuit. This allows also a higher fluid velocity in the heat exchanger 7 and suction line of the compressor.

In case the compressor is an oil lubricated piston compressor, this allows to better carry along oil that would have leaked and accumulated in the refrigerant circuit and especially in the heat exchanger 7. However, at low evaporator load keeping the temperature at the heat exchanger inlet constant might be more difficult to control.

In a preferred embodiment illustrated in figures 3 and 4, the downstream end of the bypass conduit 13 is connected to the outlet of the heat exchanger 7 of the transfer circuit 4. This is to say the hot compressed bypassed refrigerant is reinjected and mixed with the refrigerant exiting the said heat exchanger 7.

This means that the hot compressed bypassed refrigerant is not injected in the compressor 8 inlet or suction line but more upstream and preferably closer to the refrigerant outlet of the heat exchanger 7.

For example, the downstream end of the bypass conduit 13 is tied up (connected) in the refrigerant cooling loop circuit 20 just after the evaporator 11 section, for example between twenty cm and fourty cm after the outlet of this evaporator 11 section or after the outlet of the heat exchanger 7. And preferably this connection of the hot gas bypass conduit 13 is not too close to a refrigerant temperature measurement 17 at the outlet of the evaporator 11.

This permits to avoid or limit influence of the bypass fluid on temperature measured 17). Thus preferably, a temperature measurement 17 is as close as possible to the outlet of the evaporator 11 (for example around 5-10cm from the outlet due to the required fittings) and the tie in of the bypass conduit 13 is around 20-30cm downstream or the outlet or 30 to 30 cm downstream the temperature sensor 17 (for example 20 to 30 cm downstream a first bend of the refrigerant circuit/conduit). However, the evaporator 11 is generally mounted inside a dispenser and the pipes come from below, the location is nearly automatically defined due to the available space.

Compared to the solution described on figure 2, this solution prevents or lowers the problems of a fluctuating temperature at the inlet of the heat exchanger 7 as there is not mixing of hot and cold refrigerant at the inlet of the heat exchanger 7. Compared to the solution described on figure 1, this solution helps oil return and prevents liquid refrigerant accumulation in the return line of the refrigerant cooling loop circuit 20 (i.e. in the line from heat exchanger to the compressor inlet.

Preferably, the bypass valve 15 is a controlled valve able to be set in a closed position or a plurality of open positions or able to be set in opened and closed positions (for example full open and full closed) for modulated periods of time (e.g. Pulse Width Modulation on solenoid valves for example). This allows interrupting or for varying the flowrate of refrigerant flowing in the bypass conduit 13. The device 1 may comprise an electronic controller 21 connected to the bypass valve 15 and configured (for example programmed) for controlling the opening of said the bypass valve 15 (see figure 4).

The electronic controller 21 may comprise organ(s) for storing treating receiving and/or sending data. For example, it comprises microprocessor(s) and/or calculator(s) and/or computer. The electronic controller 21 might be located in the device or station or might distant. This electronic controller 21 may also control the flow of gas in the transfer circuit 4 to the tank 3.

The compressor 8 is preferably a variable speed compressor. The electronic controller 21 might be connected to the compressor 8 and configured for controlling the compressor 8 (on/off state) and the compressor 8 speed.

The cooling power of the refrigeration system may be primarily controlled by the opening of expansion valve 10. The controller 21 is preferably connected to the expansion valve 10 and configured for controlling cooling power produced and provided by the refrigeration system via the control of the opening of the expansion valve 10.

In order to maintain a constant evaporation pressure, the suction pressure upstream the compressor 8, especially at the inlet of heat exchanger 7, has to remain in a predetermined range.

The control of the evaporation pressure might thus be made via the control of the bypass valve 15 and the compressor 8 speed.

The evaporation temperature, i.e. the temperature of the refrigerant after the expansion valve is depending on the pressure downstream of the expansion valve 10.

Based on the desired evaporation temperature (for a predetermined cooling of the refuelling gas) the required suction pressure can be calculated (by mean of appropriate equation of sate or correlation).

The pressure can be measured at the exchanger 7 or preferably at the suction side of the compressor 8. As illustrated in figure 4, the device may comprise a pressure sensor 16 for sensing the refrigerant pressure in the cooling loop circuit 20 between the compressor 8 inlet and the heat exchanger 7 outlet, notably at the inlet of the compressor 8.

To compensate for pressure losses, a measurement 18 of the temperature at the inlet of the heat exchanger 7 may be used to decrease the setpoint of the suction pressure control.

As illustrated in figure 4, the device may comprise a temperature sensor 18 for sensing the refrigerant temperature in the evaporation section 11 upstream the heat exchanger 7, notably at the inlet of the heat exchanger 7.

The temperature at the inlet 18 is equal to the evaporation temperature given by the suction pressure. Instead a measuring, a calculated inlet temperature via the suction pressure reacts faster and gives better control.

In this context the terms « temperature sensor » means a device for directly or indirectly measuring a temperature and/or a device for calculating the temperature based on appropriate parameter(s).

The suction pressure of the compressor 8 may be controlled with the control of the flow of hot gas admitted in the bypass conduit 13 and with the speed of the compressor 8.

Zero refrigerant flow through the heat exchanger 7 may be achieved if the compressor 8 is at minimum speed (or stopped) and the bypass regulating valve 15 is fully open.

The maximum flow of refrigerant through the heat exchanger 7 is obtained when bypass regulating valve 15 is closed and the compressor 8 is at its maximum speed.

This relation might be controlled with a split range control technology.

This permits to make sure that there is always sufficient superheat at the suction side of the compressor 8.

Fast load changes may result in fast reactions of the expansion valve 10. This has an effect on the suction pressure of the compressor 8. For a fast reaction of the pressure control, the opening of the expansion valve 10 can be as associated with a feed forward signal to the pressure control output (i.e. by-pass regulating valve 15 and compressor 8 speed set-points).

If the cooling demand increases, the opening of expansion valve 10 is increased. To keep the evaporation pressure constant, the signal to the expansion valve 10 may also be used to calculate a feed forward signal to the suction pressure control. This means that the increase of the opening of the expansion valve might command the decrease of the by-passed refrigerant flow and/or the increase of compressor 8 speed.

In typical refrigeration applications, the superheat (refrigerant temperature) can be measured just after the evaporator section 11 (at the outlet of the heat exchanger 7).

Alternatively, or in addition, it is possible to measure the superheat closer to the compressor 8 inlet, for example at the inlet of the frigorific module 14 (the frigorific module may be named also chiller).

The main reason to measure temperature close to the evaporator section 11 (heat exchanger 7) is energy consumption. In the device, the distance between the chiller and the dispenser 6 can be used to subcool the liquid refrigerant and increase the temperature of the gaseous refrigerant at the suction side of the compressor 8. For example, referring to figure 4, this can be achieved by running the line between outlet of condensing section 9 and expansion valve 10, along with the line evaporative section 11 and superheat control 22, within the same heat insulation material or structure. For this reason, the superheat control is preferably controlled closer to the compressor 8 than to the heat exchanger 7.

Thus, the device 1 preferably comprise a temperature sensor 17 for sensing the refrigerant temperature in the refrigerant cooling loop circuit 20 between the compressor 8 inlet and the heat exchanger 7 outlet and, notably a sensor 22 at the inlet of the compressor 8.

The electronic controller 21 can configured for regulating the temperature of the refrigerant at the inlet of the compressor 8 in a predetermined temperature range via a control of the compressor 8 speed and the opening of the bypass valve 15.

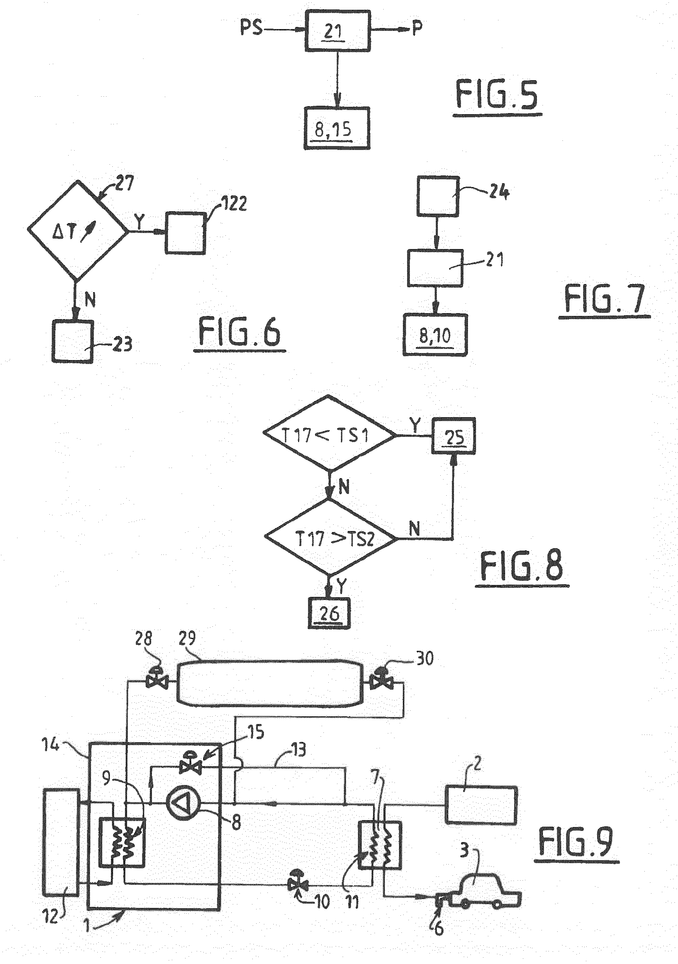

As illustrated in figure 5, based on the actual (measured or calculated pressure P and the Pressure set-point PS (pressure needed), the electronic controller acts on the bypass valve 15 and compressor 8.

The control of the cooling power may be based on temperature measure (a superheat control) at the outlet of the heat exchanger 7. This control scheme works well when there are only slow changes in cooling demand. However, in case of tanks refuelling station, fast load changes might happen. The simple temperature control strategy would fail to keep the gas temperature (example H2) to be cooled at the right temperature range for refuelling (typically between -33°C and -40°C).

In a typical refrigeration application, the cooling demand changes are quite slow. In those cases, the reaction speed of the chiller is thus not important.

For refuelling stations, the cooling demand may change within seconds from zero to full cooling power. For this reason, a single temperature based control might not be sufficient.

Preferably, the device comprises a differential temperature sensor system measuring the difference between the temperature of the refrigerant in the refrigerant cooling loop circuit 20 at the outlet of the heat exchanger 7 and the temperature of the refrigerant in the cooling loop circuit 20 at the inlet of the heat exchanger 7. The electronic controller 21 may be configured for controlling the cooling power produced as a function of this temperature differential.

For example, the temperature differential is calculated based on temperature sensors 17, 18 at outlet and inlet of the heat exchanger 7.

The expansion valve 10 might be control via a closed loop control on refrigerant temperature difference between inlet 18 and outlet 17 of the heat exchanger 8. When there is no or low cooling power required, (heat exchanger cold in standby mode for example), temperature difference is very low. As the cooling demand increases, the temperature difference increases and the control will cause the expansion valve 10 to open as required.

As the actual cooling power is directly linked to the opening of the expansion valve 10 (typically with proportional and/or modulated opening times), a measurement to control if the supplied cooling power is too high or too low may thus be the temperature difference between refrigerant inlet and refrigerant outlet to heat exchanger 7.

The device 1 may be switched in a refuelling mode when there is a refuelling demand.

For example, the refuelling mode might be activated upon generating or receiving in the electronic controller 21 a signal or command. For example, a payment/demand from a user and/or when the refuelling nozzle 6 is removed from a base dispenser.

After the nozzle 6 is removed it may take some time (for example 10s to 20s) for the user to attach the nozzle 6 to the car and to activate the refuelling sequence.

When the connection of the nozzle to the tank 3 is made, then a pressure pulse test may be done (about 30s for example) and the actual refuelling can then start.

Within a short period after the refuelling starts (for example 30seconds) a predetermined low gas temperature should be reached at the dispenser outlet 6 (for example about -33°C).

The device can be designed so that within a time period (example 60s) after the nozzle is removed from its base the heat exchanger 7 is cooled at predetermined temperature (-38°C for example).

This means that the heat exchanger is subcooled prior to the gas flow in the transfer circuit 4 to the tank 3.

If the system is in stand-by mode (as described below) when cooling of heat exchanger 11 prior to the gas flow is requested, electronic controller 21 may start compressor 8 and control expansion valve 10 and by-pass regulating valve 15 as described above. This will cause a fast cooling.

The refuelling of a tank 3 can take between 150s and 500s for example. During that time, the actual cooling demand may change rapidly. These rapid changes are typically too fast for a classical control. To maintain a stable temperature of the hydrogen a feed forward control is preferably implemented.

For example, the operating parameters of the refrigeration system will be based on the actual required cooling energy.

Thus, once the actual refuelling starts, the refuelling will create a cooling demand. Based on the actual cooling demand the required cooling power may be calculated/provided.

The electronic controller 21 may calculate and control the required refrigerant flow in the heat exchanger 7 (as the cooling demand increases the refrigerant flow has to increase accordingly).

The compressor 8 may start shortly after the refuelling start. To limit the power consumption, the refrigeration system may cool the internal heat exchanger 9 (condenser section) and the heat exchanger 7 as much as possible at the beginning.

As the cooling demand increases first the bypass valve 15 might be closed and then the compressor 8 speed might be increased as required. This can be done via a split range control.

To react faster on load changes, the required cooling power may be calculated based on the gas flow to be cooled. The calculated cooling demand may act as on offset to the electronic controller 21. The expansion valve 10 may thus be opened before a significant change in differential temperature occurs at the heat exchanger 7.

A feed forward control based on the actual cooling demand may be used. Based on the gas flow in the transfer circuit 4 and the (expected) inlet temperature, the required cooling power may be calculated. Based on the required cooling power, the required refrigerant flow can be calculated and then the required opening of the expansion valve 10. The required expansion valve 10 opening may thus be used to generate a feed forward signal for the cooling power control.

An estimate of the required cooling power may be calculated using the instrumentation available on the device 1. For example, the cooling power required might set equal to the gas flowrate to be cooled multiplied by the difference between the enthalpy of the gas at the inlet of the heat exchanger 7 and the enthalpy of said gas at the outlet of the heat exchanger 7. This can be calculated with the expected outlet gas temperature at the nozzle 6 (typically -40°C). As a minimum, gas flow estimate may be needed. This can preferably be taken from a flow meter signal in the transfer circuit for example. But this can be also calculated from the signal of other instruments (e.g. a pressure drop or pressure change in the source 2 such as buffer(s)). To improve the accuracy of cooling power calculation, other measured values may be taken into account such as gas pressure upstream the heat exchanger 7, gas pressure downstream the heat exchanger 7, gas temperature upstream the heat exchanger, ambient temperature, temperature of the heat exchanger...

As illustrated in figure 7 a cooling power demand signal 24 will cause electronic controller 21 to acts on compressor 8 and bypass valve 10 to fit with the demand.

The device might also be put in a standby mode (between two fillings).

During this standby mode the heat exchanger 7 might be kept at a temperature that allows a quick start of a refuelling (with a predefined time period, for example within 60s).

This requirement may define the maximum temperature of the heat exchanger 7 during standby mode. For example, if the refrigeration system is capable to cool the heat exchanger 7 by 20°K within 60s, then the active cooling during standby mode shall start when the heat exchanger 7 temperature is above a predefined threshold, for example above -18°C.

If the system is at a low temperature (for example heat exchanger temperature below a first standby temperature threshold, for example below -20°C) the system is put/kept in standby mode. The compressor is then preferably switched off.

During standby mode, the liquid refrigerant warms up and the pressure in the refrigerant cooling loop circuit 20 will increases.

To reduce the pressure in the refrigerant cooling loop circuit 20 (pressure increases beyond a preset limit), the cooling source 12 might be started to produce or provide cold to the refrigerant circuit 20.

In case the temperature of the heat exchanger 7 must be lowered (or maintained cold), the compressor 8 might be started. The start of compressor 8 will cause flow in the loop and a reduction of the pressure at its inlet.

The start of compressor 8 will cause flow in the loop and a reduction of the pressure at its inlet.

If during standby mode the heat exchanger 7 warms up too much, it is preferably cooled again.

At this operating scenario the time to reach the low temperature is not important. Thus the compressor 8 can be operated at the speed with the highest efficiency (typically its lowest speed).

At minimum speed of the compressor 8, the cooling power is for example 10 to 20kW. This is enough cooling power to cool a typical heat exchanger by 30°K within 120sec. The minimum operating time of the compressor 8 might be fixed (for example 120s). Thus there might be no need for a higher compressor speed during this standby cooling of the heat exchanger 7.

For example, if the heat exchanger 7 temperature T17 (sensor 19 at figure 8) falls below first standby temperature threshold ("TS1" at figure 8 and for example equal to -37°C), the refrigeration system (the cooling) or compressor 8 can switched off (on maintained switched off, see ref. 25 at figure 8). The heat exchanger 7 temperature can be for example be measured via temperature sensor 19 or calculated based on other parameter(s).

However, if this temperature T17 is above a second standby temperature threshold TS2 (for example above -20°C or the like) the refrigeration system is (or can) be switched on (see "Y" and ref. 26 at figure 8). Otherwise the refrigeration system (the cooling) or compressor can be switched off (on maintained switched off, see ref. 25 at figure 8.

The electronic controller 21 may control the refrigeration system so that the setpoint of the refrigerant temperature at the heat exchanger inlet is a predefined temperature, for example -40°C.

Thus the electronic controller 21 may regulate the evaporation temperature, for example measured at the inlet of the heat exchanger 7. If this temperature increases too much a pressure setpoint at compressor 8 inlet may be decreased (i.e. the temperature to be achieved at the heat exchanger inlet).

The expected pressure losses via the heat exchanger 7 and the compressor suction line might be less than 1bar. Thus, the effect on the evaporation temperature due to pressure losses can be said less than 2°K in case refrigerant is CO2.

If a different refrigerant is used the temperature effect might be much bigger..

The electronic controller 21 may control the temperature difference between inlet 18 and outlet 17 of heat exchanger 7. If the heat exchanger warms up (given by temperature differential ΔT increase) see reference 27 and arrow "Y" at figure 6, the controller 21 can open the expansion valve 10 (see reference 122 at figure 6).

As the heat exchanger 7 cools down, the temperature differential decreases (see arrow "N" at figure 6) and the electronic controller 21 will close expansion valve 10 (see reference 23 at figure 6).

Thus, the amount of refrigerant flowing in the heat exchanger 7 can be controlled based on this temperature differential (between inlet and outlet). If the differential temperature increases the output of the controller 21 increases and more refrigerant is sent to the heat exchanger (and vice versa). This can be controlled as feed forward control signal on the valve 10.

The minimum output might be adjusted in such a way that at zero load the superheat temperature at the inlet of the compressor 8 is around a predefined temperature (for example +10°K).

In case of a "standby cooling" the set point can be higher, for example +20°K.

The electronic controller 21 can control the compressor 8 speed and the bypass valve 15 to maintain a constant pressure at the inlet of the compressor 8.

The superheat control (temperature control) is preferably always in operation. In case the superheat temperature drops too low the expansion valve 10 can be closed as required.

Preferably, if the superheat temperature at the inlet of the compressor is too low the expansion valve 10 is closed independant of the actual cooling demand.

In case the superheat temperature increase too much the expansion valve 10 can be opened as required.

If the superheat temperature at the inlet of the compressor is too low the hot gas bypass valve 15 can be opened.

To avoid complete closing of the expansion valve 10 valve, a minimal opening of the expansion valve 1 0can be set. This minimum opening can be set such that the suction temperature at the compressor 8 inlet is always sufficiently superheated due to the hot bypassed gas injection.

In addition to the advantages above, the device may allow a very fast change in cooling power while maintaining a constant evaporation pressure and sufficient superheat at the suction of the compressor 8.

When the device 1 is in the standby mode, the refrigerant (typically liquid CO2) downstream of condenser heat exchanger 9 warms up and may evaporate leading to a pressure increase on the discharge side of the compressor 8. One solution is to start the cooling source 2 for providing cold and lowering the refrigerant pressure. To reduce the number of starts of the cold source 12, as illustrated at figure 9, the device may comprise an expansion vessel 29 comprising an inlet connected to the refrigerant cooling loop circuit 20 at the outlet of the compressor 8 side. The expansion vessel 29 comprises an outlet connected to the refrigerant cooling loop circuit 20 at the outlet of the compressor 8 side. The device comprises set of valves 28, 30 for controlling the flow of refrigerant from the circuit 20 (downstream the compressor outlet) to the expansion vessel 29 and from the expansion vessel 29 to the circuit 20 (upstream the compressor 8 inlet). The electronic controller 21 may be configured to open the inlet valve 28 to the expansion vessel 29 until the pressure downstream the compressor 8 is below a certain value (typically open at 35barg) and close at preset value (for example33barg).

When the temperature of heat exchange 7 is too high or when the pressure in the expansion vessel 29 is too high (for example above 15barg) the cold source 12 might be started and the compressor 8 might be started. Outlet valve 30 of expansion vessel 29 might be opened and the pressure in the expansion vessel 29 is thus reduced to appropriate value again (10barg for example).

## Claims

1. A device for refuelling containers with pressurized gas, notably for refuelling gaseous hydrogen tanks, comprising a pressurized gas source (2), a transfer circuit (4) comprising one upstream end (5) connected to the gas source (2) and at least one downstream end (6) intended to be removably connected to a container (3), the device (1) comprising a refrigeration system for cooling the gas flowing from the gas source (2) prior to its entering into the container (3), the refrigeration system comprising a refrigerant cooling loop circuit (20) comprising, arranged in series, a compressor (8), a condenser section (9), an expansion valve (10) and an evaporator section (11), the refrigeration system comprising a cold source (12) in heat exchange with the condenser section (9) and a heat exchanger (7) located in the transfer circuit (4) and comprising a heat exchange section between the gas flowing in the transfer circuit (4) and the evaporator section (11), the device comprising an electronic controller (21) connected to the expansion valve (10) and configured for controlling cooling power produced by the refrigeration system via the control of the opening of the expansion valve (10), the electronic controller (21) being configured to generate or receive a signal indicative of the cooling power needed at heat exchanger (7) for cooling the flow of gas in the transfer circuit through the heat exchanger (7) and, in response, for controlling the cooling power produced by the refrigeration accordingly, **characterized in that** the refrigerant cooling loop circuit (20) comprises a bypass conduit (13) comprising an upstream end connected to the outlet of the compressor (8) and a downstream end connected to the refrigerant cooling loop circuit (20) upstream the compressor (8) inlet and bypassing the condenser section (9) and expansion valve (10), the device comprising a bypass regulating valve (15) for controlling the flow of refrigerant flowing into the by-pass conduit (13).

2. Device according to claim 1 **characterized in that** the signal indicative of the cooling power needed at the heat exchanger (7) comprises or depends on the quantity or the flowrate of gas flowing through the transfer circuit (4).

3. Device according to claim 1 or 2 **characterized in that** the signal indicative of the cooling power needed at the heat exchanger (7) comprises or depends on the temperature of the gas flowing through the transfer circuit (4).

4. Device according to any of claims 1 to 3, **characterized in that** the signal indicative of the cooling power needed at the heat exchanger (7) comprises or depends on external demand such as a wireless signal transmitted to the electronic controller (21).

5. Device according to any of claims 1 to 4, **characterized in that** the signal indicative of the cooling power needed at the heat exchanger (7) comprises or depends on at least one among: the pressure of the gas flowing through the transfer circuit (4), a pressure value or pressure change in the gas source (2).

6. Device according to any of claims 1 to 5, **characterized in that** it comprises a differential temperature sensor (17, 18) system measuring the difference between the temperature of the refrigerant in the refrigerant cooling loop circuit (20) at the outlet of the heat exchanger (7) and the temperature of the refrigerant in the cooling loop circuit (20) at the inlet of the heat exchanger, the electronic controller (21) being configured for controlling the cooling power produced as a function of this temperature differential.

7. Device according to any of claims 1 to 6, **characterized in that** the downstream end of the bypass conduit (13) is connected at the outlet of the heat exchanger (7) of the transfer circuit (4).

8. Device according to any of claims 1 to 7, **characterized in that** the electronic controller is configured for calculating the cooling power needed as a function of the gas flowrate to be cooled multiplied by the difference between the enthalpy of the gas at the inlet of the heat exchanger (7) and the enthalpy of said gas at the outlet of the heat exchanger (7) to achieve a predetermined temperature at the downstream end of the transfer circuit (4).

9. A process for refuelling containers with pressurized gas, notably for refuelling gaseous hydrogen tanks, with a device comprising gas source (2), a transfer circuit (4) for transferring compressed gas from the gas source (2) to a container (3), the process comprising a step of cooling a heat exchanger (7) located in the transfer circuit (4), the heat exchanger (7) being in heat exchange with the gas flowing from the source (2) to the container(s) (3), the step of cooling comprising the production of a cooling power in a evaporator section (11) of a refrigerant cooling loop circuit (20), the cooling loop circuit (20) comprising, arranged in series, a compressor (8), a condenser section (9), an expansion valve (10) and the evaporator section (11), the condenser section (9) being in heat exchange with a cold source (12), the process comprising the step of generating or receiving a signal indicative of the cooling power needed at heat exchanger (7) for cooling the flow of gas in the transfer circuit through the heat exchanger (7) and, in response, controlling the cooling power produced by the refrigeration accordingly by controlling the opening of the expansion valve, **characterized in that** the refrigerant cooling loop circuit (20) comprises a bypass conduit (13) comprising an upstream end connected to the outlet of the compressor (8) and a downstream end connected to the refrigerant cooling loop circuit (20) upstream the compressor (8) inlet and bypassing the condenser section (9) and expansion valve (10), the device comprising a bypass regulating valve (15) for controlling the flow of refrigerant flowing into the by-pass conduit (13)..

10. Process according to claim 9, **characterized in that** it comprises a step of controlling the cooling power produced in the evaporator section (11) of the refrigerant cooling loop circuit (20) via the control of the opening of the expansion valve (10).

11. Process according to any of claims 9 to 10 **characterized in that** it comprises a step of controlling the cooling power produced at the evaporator section (11) of the refrigerant cooling loop circuit (20) as a function of a signal indicative of the cooling power demand at the heat exchanger (7), said signal including at least one among: the quantity or flowrate of gas flowing through the transfer circuit (4), the temperature of the gas flowing through the transfer circuit (4), the pressure of the gas flowing through the transfer circuit (4), a pressure or pressure change in the gas source (2), a demand from a user for refuelling a container, a wireless signal.

12. Process according to any of claims 9 to 11 **characterized in that** the cooling power required is calculated based on the gas flow in the transfer circuit (4) and a predetermined inlet temperature at the heat exchanger (7).

13. Process according to any of claims 9 to 12 **characterized in that** the required refrigerant flow in the heat exchanger (7) is calculated based on the required cooling power, said flow being provided via required opening of the expansion valve (10).

14. Process according to claim 13 **characterized in that** the expansion valve (10) opening signal is used to generate a feed forward signal for the cooling power control.

## Patentansprüche

1. Vorrichtung zum Wiederauffüllen von Behältern mit Druckgas, insbesondere zum Wiederauffüllen von Tanks für gasförmigen Wasserstoff, umfassend eine Druckgasquelle (2), einen Transferkreis (4), der ein stromaufwärtiges Ende (5), das mit der Gasquelle (2) verbunden ist, und mindestens ein stromabwärtiges Ende (6), das dazu vorgesehen ist, entfernbar mit einem Behälter (3) verbunden zu sein, umfasst, wobei die Vorrichtung (1) ein Kühlsystem zum Kühlen des aus der Gasquelle (2) strömenden Gases vor seinem Eintritt in den Behälter (3) umfasst, wobei das Kühlsystem einen Kältemittelkühlschleifenkreis (20) umfasst, der, in Reihe angeordnet, einen Kompressor (8), einen Kondensatorabschnitt (9), ein Expansionsventil (10) und einen Verdampferabschnitt (11) umfasst, wobei das Kühlsystem eine Kältequelle (12) in Wärmeaustausch mit dem Kondensatorabschnitt (9) und einen Wärmetauscher (7) umfasst, der in dem Transferkreis (4) angeordnet ist und einen Wärmeaustauschabschnitt zwischen dem in dem Transferkreis (4) strömenden Gas und dem Verdampferabschnitt (11) umfasst, wobei die Vorrichtung eine elektronische Steuerung (21) umfasst, die mit dem Expansionsventil (10) verbunden und dazu ausgelegt ist, eine durch das Kühlsystem erzeugte Kühlleistung mittels der Steuerung der Öffnung des Expansionsventils (10) zu steuern, wobei die elektronische Steuerung (21) dazu ausgelegt ist, ein Signal zu generieren oder zu empfangen, das die an dem Wärmetauscher (7) zum Kühlen des Gasstroms in dem Transferkreis durch den Wärmetauscher (7) erforderliche Kühlleistung anzeigt, und, in Reaktion darauf, die durch die Kühlung erzeugte Kühlleistung entsprechend zu steuern, **dadurch gekennzeichnet, dass** der Kältemittelkühlschleifenkreis (20) eine Umgehungsleitung (13) umfasst, die ein stromaufwärtiges Ende, das mit dem Auslass des Kompressors (8) verbunden ist, und ein stromabwärtiges Ende, das stromaufwärts des Einlasses des Kompressors (8) mit dem Kältemittelkühlschleifenkreis (20) verbunden ist und den Kondensatorabschnitt (9) und das Expansionsventil (10) umgeht, umfasst, wobei die Vorrichtung ein Umgehungsregelventil (15) zum Steuern des Kältemittelstroms, der in die Umgehungsleitung (13) strömt, umfasst.

2. Vorrichtung nach Anspruch 1, **dadurch gekennzeichnet, dass** das Signal, das die an dem Wärmetauscher (7) erforderliche Kühlleistung anzeigt, die Menge oder die Strömungsrate von durch den Transferkreis (4) strömendem Gas umfasst oder davon abhängt.

3. Vorrichtung nach Anspruch 1 oder 2, **dadurch gekennzeichnet, dass** das Signal, das die an dem Wärmetauscher (7) erforderliche Kühlleistung anzeigt, die Temperatur des durch den Transferkreis (4) strömenden Gases umfasst oder davon abhängt.

4. Vorrichtung nach einem der Ansprüche 1 bis 3, **dadurch gekennzeichnet, dass** das Signal, das die an dem Wärmetauscher (7) erforderliche Kühlleistung anzeigt, eine externe Anforderung, wie etwa ein zu der elektrischen Steuerung (21) übertragenes Funksignal, umfasst oder davon abhängt.

5. Vorrichtung nach einem der Ansprüche 1 bis 4, **dadurch gekennzeichnet, dass** das Signal, das die an dem Wärmetauscher (7) erforderliche Kühlleistung anzeigt, mindestens eines von Folgendem umfasst oder davon abhängt: den Druck des durch den Transferkreis (4) strömenden Gases, einen Druckwert oder eine Druckänderung in der Gasquelle (2).

6. Vorrichtung nach einem der Ansprüche 1 bis 5, **dadurch gekennzeichnet, dass** sie ein Differenztemperatursensor(17, 18)-System umfasst, das die Differenz zwischen der Temperatur des Kältemittels in dem Kältemittelkühlschleifenkreis (20) am Auslass des Wärmetauschers (7) und der Temperatur des Kältemittels in dem Kühlschleifenkreis (20) am Einlass des Wärmetauschers misst, wobei die elektronische Steuerung (21) dazu ausgelegt ist, die erzeugte Kühlleistung in Abhängigkeit von der Temperaturdifferenz zu steuern.

7. Vorrichtung nach einem der Ansprüche 1 bis 6, **dadurch gekennzeichnet, dass** das stromabwärtige Ende der Umgehungsleitung (13) am Auslass des Wärmetauschers (7) des Transferkreises (4) verbunden ist.

8. Vorrichtung nach einem der Ansprüche 1 bis 7, **dadurch gekennzeichnet, dass** die elektronische Steuerung dazu ausgelegt ist, die erforderliche Kühlleistung in Abhängigkeit von der Strömungsrate des zu kühlenden Gases multipliziert mit der Differenz zwischen der Enthalpie des Gases am Einlass des Wärmetauschers (7) und der Enthalpie des Gases am Auslass des Wärmetauschers (7) zu berechnen, um eine vorbestimmte Temperatur an dem stromabwärtigen Ende des Transferkreises (4) zu erhalten.

9. Verfahren zum Wiederauffüllen von Behältern mit Druckgas, insbesondere zum Wiederauffüllen von Tanks für gasförmigen Wasserstoff, mit einer Vorrichtung, die eine Gasquelle (2), einen Transferkreis (4) zum Transferieren von Druckgas von der Gasquelle (2) zu einem Behälter (3) umfasst, wobei das Verfahren einen Schritt zum Kühlen eines in dem Transferkreis (4) angeordneten Wärmetauschers (7) umfasst, wobei der Wärmetauscher (7) in Wärmeaustausch mit dem von der Quelle (2) zu dem oder den Behälter(n) (3) strömenden Gas steht, wobei der Schritt zum Kühlen die Erzeugung einer Kühlleistung in einem Verdampferabschnitt (11) eines Kältemittelkühlschleifenkreises (20) umfasst, wobei der Kühlschleifenkreis (20), in Reihe angeordnet, einen Kompressor (8), einen Kondensatorabschnitt (9), ein Expansionsventil (10) und den Verdampferabschnitt (11) umfasst, wobei der Kondensatorabschnitt (9) in Wärmeaustausch mit einer Kältequelle (12) steht, wobei das Verfahren den Schritt Generieren oder Empfangen eines Signals, das die an dem Wärmetauscher (7) zum Kühlen des Gasstroms in dem Transferkreis durch den Wärmetauscher (7) erforderliche Kühlleistung anzeigt, und, in Reaktion darauf, entsprechendes Steuern der durch die Kühlung erzeugten Kühlleistung durch Steuern der Öffnung des Expansionsventils umfasst, **dadurch gekennzeichnet, dass** der Kältemittelkühlschleifenkreis (20) eine Umgehungsleitung (13) umfasst, die ein stromaufwärtiges Ende, das mit dem Auslass des Kompressors (8) verbunden ist, und ein stromabwärtiges Ende, das stromaufwärts des Einlasses des Kompressors (8) mit dem Kältemittelkühlschleifenkreis (20) verbunden ist und den Kondensatorabschnitt (9) und das Expansionsventil (10) umgeht, umfasst, wobei die Vorrichtung ein Umgehungsregelventil (15) zum Steuern des Kältemittelstroms, der in die Umgehungsleitung (13) strömt, umfasst.

10. Verfahren nach Anspruch 9, **dadurch gekennzeichnet, dass** es einen Schritt zum Steuern der in dem Verdampferabschnitt (11) des Kältemittelkühlschleifenkreises (20) erzeugten Kühlleistung mittels der Steuerung der Öffnung des Expansionsventils (10) umfasst.

11. Verfahren nach einem der Ansprüche 9 bis 10, **dadurch gekennzeichnet, dass** es einen Schritt zum Steuern der in dem Verdampferabschnitt (11) des Kältemittelkühlschleifenkreises (20) erzeugten Kühlleistung in Abhängigkeit von einem Signal, das die Kühlleistungsanforderung an dem Wärmetauscher (7) anzeigt, umfasst, wobei das Signal mindestens eines von Folgendem umfasst: die Menge oder Strömungsrate von durch den Transferkreis (4) strömendem Gas, die Temperatur des durch den Transferkreis (4) strömenden Gases, den Druck des durch den Transferkreis (4) strömenden Gases, einen Druck oder eine Druckänderung in der Gasquelle (2), eine Anforderung von einem Benutzer zum Wiederauffüllen eines Behälters, ein Funksignal.

12. Verfahren nach einem der Ansprüche 9 bis 11, **dadurch gekennzeichnet, dass** die erforderliche Kühlleistung basierend auf dem Gasstrom in dem Transferkreis (4) und einer vorbestimmten Einlasstemperatur an dem Wärmetauscher (7) berechnet wird.

13. Verfahren nach einem der Ansprüche 9 bis 12, **dadurch gekennzeichnet, dass** die erforderliche Kältemittelströmung in dem Wärmetauscher (7) basierend auf der erforderlichen Kühlleistung berechnet wird, wobei die Strömung über ein erforderliches Öffnen des Expansionsventils (10) bereitgestellt wird.

14. Verfahren nach 13, **dadurch gekennzeichnet, dass** das Öffnungssignal des Expansionsventils (10) verwendet wird, um ein Vorwärtskopplungssignal für die Kühlleistungssteuerung zu generieren.

## Revendications

1. Dispositif pour ravitailler en gaz sous pression des contenants, en particulier pour ravitailler des réservoirs d'hydrogène gazeux, comprenant une source de gaz sous pression (2), un circuit de transfert (4) comprenant une extrémité amont (5) raccordée à la source de gaz (2) et au moins une extrémité aval (6) prévue pour être raccordée de façon amovible à un contenant (3), le dispositif (1) comprenant un système de réfrigération pour refroidir le gaz s'écoulant depuis la source de gaz (2) avant son entrée dans le contenant (3), le système de réfrigération comprenant un circuit en boucle de refroidissement du réfrigérant (20) comprenant, agencés en série, un compresseur (8), une section de condensation (9), une soupape de détente (10) et une section d' évaporation (11), le système de réfrigération comprenant une source de froid (12) en échange de chaleur avec la section de condensation (9) et un échangeur de chaleur (7) situé dans le circuit de transfert (4) et comprenant une section d'échange de chaleur entre le gaz s'écoulant dans le circuit de transfert (4) et la section d'évaporation (11), le dispositif comprenant une unité de commande électronique (21) connectée à la soupape de détente (10) et configurée pour commander une puissance de refroidissement produite par le système de réfrigération par l'intermédiaire de la commande de l'ouverture de la soupape de détente (10), l'unité de commande électronique (21) étant configurée pour générer ou recevoir un signal indicatif de la puissance de refroidissement nécessaire à l'échangeur de chaleur (7), pour refroidir l'écoulement du gaz dans le circuit de transfert à travers l'échangeur de chaleur (7) et, en réponse, pour commander la puissance de refroidissement produite par le système de réfrigération en conséquence, **caractérisé en ce que** le circuit en boucle de refroidissement du réfrigérant (20) comprend un conduit de dérivation (13) comprenant une extrémité amont raccordée à la sortie du compresseur (8) et une extrémité aval raccordée au circuit en boucle de refroidissement du réfrigérant (20) en amont de l'entrée du compresseur (8) et contournant la section de condensation (9) et la soupape de détente (10), le dispositif comprenant une soupape de régulation de dérivation (15) destinée à commander l'écoulement du réfrigérant s'écoulant en entrée dans le conduit de dérivation (13).

2. Dispositif selon la revendication 1, **caractérisé en ce que** le signal indicatif de la puissance de refroidissement nécessaire à l'échangeur de chaleur (7) comprend ou dépend de la quantité ou du débit du gaz s'écoulant à travers le circuit de transfert (4).

3. Dispositif selon la revendication 1 ou 2, **caractérisé en ce que** le signal indicatif de la puissance de refroidissement nécessaire à l'échangeur de chaleur (7) comprend ou dépend de la température du gaz s'écoulant à travers le circuit de transfert (4).

4. Dispositif selon l'une quelconque des revendications 1 à 3, **caractérisé en ce que** le signal indicatif de la puissance de refroidissement nécessaire à l'échangeur de chaleur (7) comprend ou dépend d'une demande externe, telle qu'un signal sans fil transmis à l'unité de commande électrique (21).

5. Dispositif selon l'une quelconque des revendications 1 à 4, **caractérisé en ce que** le signal indicatif de la puissance de refroidissement nécessaire à l'échangeur de chaleur (7) comprend ou dépend d'au moins un parmi : la pression du gaz s'écoulant à travers le circuit de transfert (4), une valeur de pression ou un changement de pression dans la source de gaz (2).

6. Dispositif selon l'une quelconque des revendications 1 à 5, **caractérisé en ce qu'**il comprend un système à capteur de température différentielle (17, 18) mesurant la différence entre la température du réfrigérant dans le circuit en boucle de refroidissement du réfrigérant (20) à la sortie de l'échangeur de chaleur (7) et la température du réfrigérant dans le circuit de boucle de refroidissement (20) à l'entrée de l'échangeur de chaleur, l'unité de commande électronique (21) étant configurée pour commander la puissance de refroidissement produite en fonction de ce différentiel de température.

7. Dispositif selon l'une quelconque des revendications 1 à 6, **caractérisé en ce que** l'extrémité aval du conduit de dérivation (13) est raccordée au niveau de la sortie de l'échangeur de chaleur (7) du circuit de transfert (4).

8. Dispositif selon l'une quelconque des revendications 1 à 7, **caractérisé en ce que** l'unité de commande électronique est configurée pour calculer la puissance de refroidissement nécessaire en fonction du débit du gaz destiné à être refroidi, multiplié par la différence entre l'enthalpie du gaz à l'entrée de l'échangeur de chaleur (7) et l'enthalpie dudit gaz à la sortie de l'échangeur de chaleur (7) pour atteindre une température prédéterminée à l'extrémité aval du circuit de transfert (4).

9. Procédé pour ravitailler en gaz sous pression des contenants, en particulier pour ravitailler des réservoirs d'hydrogène gazeux, avec un dispositif comprenant une source de gaz (2), un circuit de transfert (4) pour transférer un gaz comprimé depuis la source de gaz (2) à un contenant (3), le procédé comprenant une étape du refroidissement d'un échangeur de chaleur (7) situé dans le circuit de transfert (4), l'échangeur de chaleur (7) étant en échange de chaleur avec le gaz s'écoulant depuis la source (2) jusqu'au(x) contenant(s) (3), l'étape du refroidissement comprenant la production d'une puissance de refroidissement dans une section d'évaporation (11) d'un circuit en boucle de refroidissement du réfrigérant (20), le circuit en boucle de refroidissement (20) comprenant, agencés en série, un compresseur (8), une section de condensation (9), une soupape de détente (10) et la section d'évaporation (11), la section de condensation (9) étant en échange de chaleur avec une source de froid (12), le procédé comprenant l'étape de la génération ou de la réception d'un signal indicatif de la puissance de refroidissement nécessaire à l'échangeur de chaleur (7), pour refroidir l'écoulement du gaz dans le circuit de transfert par le biais de l'échangeur de chaleur (7) et, en réponse, la commande de la puissance de refroidissement produite par le système de réfrigération en conséquence, en commandant l'ouverture de la soupape de détente, **caractérisé en ce que** le circuit en boucle de refroidissement du réfrigérant (20) comprend un conduit de dérivation (13) comprenant une extrémité amont raccordée à la sortie du compresseur (8) et une extrémité aval raccordée au circuit en boucle de refroidissement du réfrigérant (20) en amont de l'entrée du compresseur (8) et contournant la section de condensation (9) et la soupape de détente (10), le dispositif comprenant une soupape de régulation de dérivation (15) destinée à commander l'écoulement du réfrigérant s'écoulant en entrée dans le conduit de dérivation (13).

10. Procédé selon la revendication 9, **caractérisé en ce qu'**il comprend une étape de la commande de la puissance de refroidissement produite dans la section d' évaporation (11) du circuit en boucle de refroidissement du réfrigérant (20) par l'intermédiaire de la commande de l'ouverture de la soupape de détente (10).

11. Procédé selon l'une quelconque des revendications 9 à 10, **caractérisé en ce qu'**il comprend une étape de la commande de la puissance de refroidissement produite, à la section d'évaporation (11) du circuit (20) de réfrigérant en boucle de refroidissement, en fonction d'un signal indicatif de la demande en puissance de refroidissement, à l'échangeur de chaleur (7), ledit signal incluant au moins un parmi : la quantité ou le débit du gaz s'écoulant à travers le circuit de transfert (4), la température du gaz s'écoulant à travers le circuit de transfert (4), la pression du gaz s'écoulant à travers le circuit de transfert (4), une pression ou un changement de pression dans la source de gaz, une demande provenant d'un utilisateur de ravitailler un contenant, un signal sans fil.

12. Procédé selon l'une quelconque des revendications 9 à 11, **caractérisé en ce que** la puissance de refroidissement requise est calculée sur la base de l'écoulement du gaz dans le circuit de transfert (4) et d'une température d'entrée prédéterminée à l'échangeur de chaleur (7).

13. Procédé selon l'une quelconque des revendications précédentes 9 à 12, **caractérisé en ce que** l'écoulement du réfrigérant requis dans l'échangeur de chaleur (7) est calculé sur la base de la puissance de refroidissement requise, ledit écoulement étant fourni par l'intermédiaire d'une ouverture requise de la soupape de détente (10).

14. Procédé selon la revendication 13, **caractérisé en ce que** le signal d'ouverture de la soupape de détente (10) est utilisé pour générer un signal à réaction prédictive pour la commande de puissance de refroidissement.
